(19) Europäisches Patentamt
European Patent Office
Office européen des brevets

(11) Veröffentlichungsnummer: **0 157 733**
**B1**

# (12) EUROPÄISCHE PATENTSCHRIFT

(45) Veröffentlichungstag der Patentschrift: **20.04.88**

(51) Int. Cl.⁴: **C 09 B 45/01** // D06P1/10, D06P3/06

(21) Anmeldenummer: **85810090.2**

(22) Anmeldetag: **04.03.85**

(54) **Verfahren zur Herstellung von 1:2-Chromkomplexazofarbstoffen.**

(30) Priorität: **08.03.84 CH 1147/84**

(43) Veröffentlichungstag der Anmeldung:
**09.10.85 Patentblatt 85/41**

(45) Bekanntmachung des Hinweises auf die Patenterteilung:
**20.04.88 Patentblatt 88/16**

(84) Benannte Vertragsstaaten:
**BE CH DE FR GB IT LI**

(56) Entgegenhaltungen:
**DD - B - 151 003**
**FR - A - 1 040 664**
**GB - A - 967 011**
**US - A - 2 906 746**
**US - A - 3 939 140**
**US - A - 4 083 839**

(73) Patentinhaber: **CIBA-GEIGY AG, Klybeckstrasse 141, CH-4002 Basel (CH)**

(72) Erfinder: **Iff, Walter, Dr., 10, Les Colombies Saint-Genis-les-Ollières, F-69290 Craponne (FR)**
Erfinder: **Parisot, Daniel, Bellevue D 52, rue des Collonges, F-69230 Saint-Genis-Laval (FR)**
Erfinder: **Schaller, Hans, Dr., 61, rue Henri Gorjus, F-69004 Lyon (FR)**

**EP 0 157 733 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Chromkomplexazofarbstoffe sind seit langem bekannt und werden in grossem Umfang für das Färben und Bedrucken von Textilien aus Fasermaterialien in den verschiedensten Nuancen eingesetzt. Die bekannten Verfahren zur Herstellung von 1:1-, symmetrischen 1:2-, gemischten 1:2- und reinen asymmetrischen 1:2-Chromkomplexazofarbstoffen unterscheiden sich voneinander in charakteristischer Weise; so erfolgt die Herstellung der 1:1-Chromkomplexazofarbstoffe durch Metallisieren der in wässriger Lösung vorliegenden Azofarbstoffe mit überschüssigen Chrom-(III)-Salzen, wobei ein pH von ca. 1 bis 2 eingehalten wird, um die Bildung von 1:2-Komplexen zu vermeiden; symmetrische und gemischte 1:2-Chromkomplexazofarbstoffe werden im allgemeinen in wässriger Lösung bei schwach saurem, neutralem oder schwach alkalischem pH hergestellt, wobei sich die gemischten 1:2-Komplexe aus den symmetrischen und dem asymmetrischen Komplex zusammensetzen; reine asymmetrische 1:2-Chromkomplexazofarbstoffe konnten bisher nur nach der Anlagerungsmethode aus entsprechend vorgebildeten 1:1-Chromkomplexazofarbstoffen und metallfreien Azofarbstoffen hergestellt werden.

Reine asymmetrische 1:2-Chromkomplexazofarbstoffe haben trotz des aufwendigen Verfahrens zu ihrer Herstellung grosse Bedeutung erlangt, da diese Farbstoffe gegenüber den 1:1-Chromkomplexen Vorteile in faserschonenden Färbemethoden bieten, gegenüber den symmetrischen 1:2-Chromkomplexen Vorteile in Löslichkeitsverhalten bieten und gegenüber 1:2-Chrom-Mischkomplexen Vorteile in der Brillanz der Nuancen bieten.

Diese Vorteile der reinen asymmetrischen 1:2-Chromkomplexazofarbstoffe sind verbunden mit dem aufwendigen, mehrstufigen Herstellungsverfahren: getrennte Herstellung der nicht-metallisierten Azofarbstoffe, Herstellung eines 1:1-Chromkomplexazofarbstoffes und dessen Isolierung und Umsetzung des 1:1-Komplexes mit dem metallfreien Azofarbstoff unter genauer Einhaltung der Mengenverhältnisse.

Die der vorliegenden Erfindung zugrunde liegende Aufgabe ist es, ein neues Verfahren zur Herstellung möglichst reiner, asymmetrischer 1:2-Chromkomplexazofarbstoffe zu finden, das eine Eintopf-Chromierung ermöglicht und damit dem bisher üblichen zwei- oder mehrstufigen Chromierungsverfahren überlegen ist, und welches Farbstoffe von solcher Reinheit liefert, die den heutigen hohen Qualitätsanforderungen entsprechen.

Es hat sich gezeigt, dass das weiter unten beschriebene Verfahren diesen Anforderungen genügt.

Gegenstand der vorliegenden Erfindung ist somit ein Verfahren zur Herstellung von zu mindestens 90% reinen, mindestens eine wasserlöslichmachende Gruppe enthaltenden, asymmetrischen 1:2-Chromkomplexazofarbstoffen in wässrigem Medium, welches dadurch gekennzeichnet ist, dass man ein Gemisch zweier metallisierbarer Azofarbstoffe im molaren Verhältnis von 0,85:1,0 bis 1,2:1,0, die identische Diazokomponenten oder identische Kupplungskomponenten enthalten und wobei nur einer der beiden Azofarbstoffe mindestens eine wasserlöslichmachende Gruppe enthält, in einem Eintopfverfahren mit einem chromabgebenden Mittel unter Druck, bei einer Temperatur oberhalb von 100 °C und einem pH zwischen 0 und 2 umsetzt und anschliessend die Umsetzung in schwach saurem, neutralem oder schwach alkalischem pH weiterführt.

Mit dem erfindungsgemässen Verfahren sind überraschenderweise nahezu reine asymmetrische 1:2-Chromkomplexazofarbstoffe nach einem Eintopf-Chromierungsverfahren herstellbar, die weniger als 10% an symmetrischen 1:2-Komplexen enthalten. Die Eintopf-Chromierung bedeutet für die Herstellung von asymmetrischen 1:2-Chromkomplexen eine gegenüber dem Stand der Technik wesentliche Verfahrensvereinfachung.

Besonders bevorzugte Ausführungsformen des erfindungsgemässen Verfahrens sind dadurch gekennzeichnet, dass man

a) als Temperatur oberhalb von 100 °C eine Temperatur von 100 bis 150 °C, insbesondere 125 bis 135 °C, wählt;

b) als pH zwischen 0 und 2 einen pH von 0 bis 1, insbesondere 0,3 bis 0,7, wählt;

c) die Umsetzung in schwach saurem, neutralem oder schwach alkalischem pH bei einer Temperatur unterhalb von 100 °C, insbesondere bei 70 bis 100 °C, und vorzugsweise bei 90 bis 95 °C, durchführt;

d) als schwach sauren, neutralen oder schwach alkalischen pH einen pH von 5 bis 9, insbesondere 6 bis 8, wählt;

e) ein Gemisch zweier definitionsgemäss verschiedener metallisierbarer Azofarbstoffe im molaren Verhältnis von 0,95:1,0 bis 1,05:1,0, insbesondere im Verhältnis von 1:1, verwendet;

f) unter einem Druck von 1 bis 5 bar (entsprechend 100000 bis 500000 Pa) vorzugsweise 1 bis 3 bar chromiert;

g) einen Überschuss von 1 bis 5 Mol-% an chromabgebendem Mittel verwendet.

Die Umsetzung der metallfreien Azofarbstoffe mit dem chromabgebenden Mittel erfolgt in wässrigen Medien in einer geschlossenen Apparatur unter Druck.

Als chromabgebende Mittel kommen Chromsalze von anorganischen oder organischen Säuren in Betracht, wie z. B. Chrom-(III)-fluorid, Chrom-(III)-chlorid, Chrom-(III)-carbonat und insbesondere Chromverbindungen aliphatischer oder aromatischer Oxycarbonsäuren, die das Chrom in komplexer Bindung enthalten wie z. B. Milchsäure, Zitronensäure, Glykolsäure, Weinsäure und Salicylsäure. Werden in dem erfindungsgemässen Verfahren anorganische Chromsalze verwendet, so führt man die Chromierung vorzugsweise in Gegenwart katalytischer Mengen von Hilfskomplexverbindungen durch, wie z. B. Weinsäure, Milchsäure, Zitronensäure oder Glykolsäure oder insbesondere Salicylsäure.

Die Chromierung kann gegebenenfalls in Anwesenheit geeigneter Zusätze, wie z. B. Salzen anorganischer oder organischer Säuren erfolgen, z. B. Natrium- oder Kaliumacetat, Natrium- oder Kaliumcarbonat, Natrium- oder Kaliumhydrogencarbonat.

Die Durchführung des erfindungsgemässen Verfahrens ist dadurch gekennzeichnet, dass man zur Chromierung des Reaktionsgemisches den pH mittels starker Säuren vorzugsweise anorganischer Säuren, wie z. B. Schwefelsäure, auf einen Wert zwischen 0 und 2 einstellt, unter Druck das Reaktionsgemisch auf eine Temperatur oberhalb von 100 °C aufheizt und einige Zeit, insbesondere 2 bis 10 Stunden, vorzugsweise 4 bis 8 Stunden, bei dieser Temperatur belässt, anschliessend das Reaktionsgemisch auf eine Temperatur und vorzugsweise unterhalb 100 °C abkühlen lässt und durch Zugabe von Alkali, wie z. B. Soda, einen schwach sauren, neutralen oder schwach alkalischen pH einstellt und die Umsetzung für kurze Zeit, vorzugsweise 10 Minuten bis 3 Stunden, insbesondere 30 bis 90 Minuten, weiterführt. Die Isolierung des zu mindestens 90% reinen asymmetrischen 1:2-Chromkomplexazofarbstoffes kann auch an sich bekannten Methoden erfolgen, wie z. B. Aussalzen, Filtrieren und anschliessender Trocknung.

Die nach dem erfindungsgemässen Verfahren erhaltenen Farbstoffe liegen entweder in der Form ihrer freien Säure oder vorzugsweise als Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Weitere bevorzugte Ausführungsformen des erfindungsgemässen Verfahrens sind dadurch gekennzeichnet,

a) dass man in einem Eintopfverfahren zwei mindestens durch eine wasserlöslichmachende Gruppe voneinander verschiedene diazotierbare Amine, die in Nachbarstellung zur Aminogruppe eine metallisierbare Gruppe enthalten, diazotiert und auf die 1,8- bis 2,2-fache molare Menge einer von wasserlöslichmachenden Gruppen freien Kupplungskomponente, die in Nachbarstellung zur Kupplungsstelle eine metallisierbare Gruppe enthält, kuppelt und anschliessend gemäss der oben angegebenen Verfahrensweise chromiert;

b) dass man in einem Eintopfverfahren ein von wasserlöslichmachenden Gruppen freies diazotierbares Amin, das in Nachbarstellung zur Aminogruppe eine metallisierbare Gruppe enthält, diazotiert und auf die je halbmolaren Mengen zweier mindestens durch eine wasserlöslichmachende Gruppe voneinander verschiedenen Kupplungskomponenten, die je in Nachbarstellung zur Kupplungsstelle eine metallisierbare Gruppe enthalten, kuppelt und anschliessend gemäss der oben angegebenen Verfahrensweise chromiert;

c) dass man zwei mindestens durch eine wasserlöslichmachende Gruppe voneinander verschiedene diazotierbare Amine, die in Nachbarstellung zur Aminogruppe eine metallisierbare Gruppe enthalten, getrennt diazotiert und beide Diazoniumsalze auf die 1,8- bis 2,2-fache molare Menge einer von wasserlöslichmachenden Gruppen freien Kupplungskomponente, die in Nachbarstellung zur Kupplungsstelle eine metallisierbare Gruppe enthält, kuppelt und anschliessend gemäss der oben angegebenen Verfahrensweise chromiert; oder

d) dass man von getrennt hergestellten Azofarbstoffen, die den oben angegebenen Anforderungen entsprechen, ausgeht.

Mit den oben angegebenen bevorzugten Varianten a) bis c) des erfindungsgemässen Verfahrens wird eine weitere Verfahrensvereinfachung erreicht, da in einem Eintopfverfahren die Diazotierung, Kupplung und Chromierung [Varianten a) und b)] oder die Kupplung und Chromierung [Variante c)] durchgeführt werden kann.

Die Diazotierung der Diazokomponenten erfolgt nach an sich bekannten Methoden, z. B. durch Einwirken salpetriger Säure in wässrig-mineralsaurer Lösung bei tiefer Temperatur, die Kupplung auf die Kupplungskomponente erfolgt ebenfalls nach an sich bekannten Methoden, z. B. bei sauren, neutralen bis alkalischen pH-Werten.

Die in dem erfindungsgemässen Verfahren eingesetzten, metallisierbaren Azofarbstoffe bzw. die Diazo- und Kupplungskomponenten enthalten als metallisierbare Gruppen insbesondere Hydroxylgruppen. Einer der eingesetzten Azofarbstoffe muss eine wasserlöslichmachende Gruppe, wie z. B. eine Sulfon-, Sulfonamid-, N-Mono- oder N,N-Dialkylsulfonamid- oder insbesondere Sulfonsäuregruppe, enthalten.

Als Sulfongruppe kommen Alkylsulfon-, insbesondere $C_{1-4}$-Alkylsulfongruppen in Betracht.

Als N-Mono- oder N,N-Dialkylsulfonamidgruppe kommt insbesondere eine solche mit einem oder zwei $C_{1-4}$-Alkylresten in Betracht.

Die in dem erfindungsgemässen Verfahren eingesetzten metallisierbaren Azofarbstoffe sind vorzugsweise Monoazofarbstoffe, die Diazokomponenten und Kupplungskomponenten der Benzol-, Naphthalin- oder heterocyclischen Reihe enthalten.

Vorzugsweise verwendet man in dem erfindungsgemässen Verfahren ein Gemisch der Azofarbstoffe der Formeln

$$\begin{array}{ccc} D & -N=N- & K \\ | & & | \\ OH & & OH \end{array} \qquad (1)$$

und

$$\left[\begin{array}{ccc} D' & -N=N- & K' \\ | & & | \\ OH & & OH \end{array}\right]-(SO_3M)_p \qquad (2)$$

worin D und D' unabhängig voneinander einen Benzol- oder Naphthalinrest bedeuten, der durch $C_{1-4}$-Alkyl, $C_{1-4}$-Alkoxy, Halogen oder Nitro substituiert sein kann, und K und K' unabhängig voneinander einen Naphthalin- oder Pyrazolonrest bedeuten, der durch $C_{1-4}$-Alkyl, $C_{1-4}$-Alkoxy, Halogen oder Nitro substituiert sein kann, und worin die Hydroxygruppen in Nachbarstellung zur Azogruppe stehen, M ein Kation ist und D und D' oder K und K' identische Reste sind und p = 1 oder 2 ist.

Eine ganz besonders bevorzugte Ausführungsform ist dadurch gekennzeichnet, dass man einen Farbstoff der Formel (1), worin D ein durch Nitro oder Chlor substituierter Benzolrest und K ein 1-Phenyl-3-methylpyrazolon-(5)- oder Naphthalinrest ist und einen Farbstoff der Formel (2), worin D' ein durch Nitro, Chlor oder gegebenenfalls Sulfo substituierter Benzolrest oder ein durch Nitro oder gegebenenfalls Sulfo substituierter Naphthalinrest und K' ein 1-Phenyl-3-methyl-pyrazolon-(5)- oder ein gegebenenfalls durch Sulfo substituierter Naphthalinrest ist, verwendet, wobei der Farbstoff der Formel (2) eine einzige Sulfonsäuregruppe enthält.

In dem erfindungsgemässen Verfahren werden als Ausgangsstoffe Diazokomponenten und Kupplungskomponenten oder aus diesen gebildete Azofarbstoffe eingesetzt, mit der Bedingung, dass die Azofarbstoffe identische Diazokomponenten oder identische Kupplungskomponenten enthalten und nur einer der beiden Azofarbstoffe mindestens eine wasserlöslichmachende Gruppe enthält.

Die in dem erfindungsgemässen Verfahren eingesetzten Azofarbstoffe sind bekannt und werden nach an sich bekannten Methoden hergestellt.

Als Diazokomponenten kommen z. B. solche der Benzol- oder Naphthalinreihe in Betracht, die ausser der metallisierbaren Gruppe und gegebenenfalls einer wasserlöslichmachenden Gruppe noch weitere Substituenten nicht salzbildender Art enthalten können, wie z. B. Nitrogruppen, Halogen, wie Fluor, Chlor und Brom, Alkylgruppen, insbesondere $C_{1-4}$-Alkylgruppen wie z. B. Methyl, Äthyl, Propyl, Isopropyl, Butyl, Isobutyl, sek.-Butyl und tert.-Butyl, Alkoxygruppen insbesondere $C_{1-4}$-Alkoxygruppen, wie z. B. Methoxy, Äthoxy, Propoxy, Isopropoxy und Butoxy.

Als Beispiele seien erwähnt: 4- oder 5-Chlor-2-aminophenol, 4-, 5- oder 6-Nitro-2-aminophenol, 4,6-Dichlor-2-aminophenol, 3,4,6-Trichlor-2-aminophenol, 4-Chlor-5- oder 6-nitro-2-aminophenol, 4-Nitro-6-chlor-2-aminophenol, 4,6-Dinitro-2-aminophenol, 1-Amino-2-hydroxynaphthalin, 2-Amino-1-hydroxybenzol-4- oder 5-sulfonsäurephenylamid, 4-Chlor-2-amino-1-hydroxybenzol-5-sulfonsäurephenyl- oder N-äthyl-N-phenylamid, 2-Aminophenol-4- oder -5-sulfonsäure, 4-Chlor- oder 4-Methyl-2-amino-phenol-5- oder -6-sulfonsäure, 4-Nitro-2-aminophenol-6-sulfonsäure, 6-Nitro-2-aminophenol-4-sulfonsäure, 2-Amino-1-hydroxynaphthalin-4- oder -8-sulfonsäure, 6-Nitro-1-amino-2-hydroxynaphthalin-4-sulfonsäure, 6-Brom- oder 6-Methyl-1-amino-2-hydroxynaphthalin-4-sulfonsäure, 1-Amino-2-hydroxynaphthalin-4-sulfonsäure, 4-Chlor- oder 4-Nitro-2-aminophenol-6-sulfonsäureamid, 6-Nitro-2-aminophenol-4-sulfonsäureamid, 2-Aminophenol- 4- oder -5-sulfonsäure-N-methylamid, 2-Aminophenol-4- oder -5-sulfonsäure-N-phenylamid, 2-Aminophenol-4- oder -5-sulfonsäure-N,N-dimethylamid, 4-Chlor-2-aminophenol-5-sulfonsäure-N-methyl-, -äthyl-, -isopropyl- oder -phenylamid, 4-Chlor-2-aminophenol-5-sulfonsäure-N,N-dimethyl-, -phenylamid, 4-Chlor-2-aminophenol-5-sulfonsäure-N,N-dimethyl-, -diäthyl- oder N-methyl-N-phenylamid und die entsprechenden Verbindungen, die anstelle einer Sulfonsäureamidgruppe eine Methylsulfon-, Äthylsulfon-, Phenylsulfon-, p-Methyl- oder p-Chlorphenylsulfongruppe enthalten.

Als Kupplungskomponenten kommen solche in Betracht, die in Nachbarstellung zu einer Hydroxygruppe kuppeln können; darunter sind auch Ketoverbindungen zu verstehen, die in Nachbarstellung zu ihrer enolisierten bzw. enolisierbaren Ketogruppe kuppelbar sind. As Kupplungskomponenten kommen insbesondere solche der Benzol-, Naphthalin- oder heterocyclischen Reihe in Betracht, die ausser der metallisierbaren Gruppe und gegebenenfalls einer wasserlöslichmachenden Gruppe noch weitere Substituenten nicht salzbildender Art wie bei den Diazokomponenten beschrieben, enthalten können.

Als Beispiele seien erwähnt: p-Kresol, p-tert.-Amylphenol, 1-Phenyl-3-methyl-5-pyrazolon, 1-(2'-Naphthylphenyl)-3-methyl-5-pyrazolon, 1,3-Diphenyl-5-pyrazolon, 1-(2'-, 3'- oder 4'-Chlorphenyl)-3-methyl-5-pyrazolon, 1-(2',5'-Dichlorphenyl)-3-methyl-5-pyrazolon, 1-(2'-, 3'- oder 4'-Methylphenyl)-3-methyl-5-pyrazolon, 1-n-Octyl-3-methyl-5-pyrazolon, 8-Hydroxychinolin, Barbitursäure, 5-Brom-, 6-Methyl- oder 6-Methoxy-2-hydroxynaphthalin, 8-Chlor-1-hydroxynaphthalin, 5-Chlor-1-hydroxynaphthalin, 5,8-Dichlor-1-hydroxynaphthalin, 4,8- oder 5,8-Dichlor-2-hydroxynaphthalin, 2-Hydroxynaphthalin, 1-Hydroxynaphthalin, 1-Phenyl-3-methyl-5-pyrazolon-2'-, -3'- oder -4'-sulfonsäure, 1-(2'-Chlor-4'- oder -5'-sulfophenyl)-3-methyl-5-pyrazolon, 1-(2',5'-Dichlor-4'-sulfophenyl)-3-methyl-5-pyrazolon, 1-[Naphthyl-(1)]-3-methyl-5-pyrazolon-4'-, -5'-, -6'-, -7'- oder -8'-sulfonsäure, 1-[Naphthyl-(2')]-3-methyl-5-pyrazolon-1'- oder -8'-sulfonsäure, 2-Hydroxynaphthalin-4-, -5-, -6- oder -7-sulfonsäure, 1-Hydroxynaphthalin-4-, -5- oder -8-sulfonsäure, 1-Phenyl-3-methyl-6-pyrazolon-3'-sulfonsäureamid oder -N-methylsulfonsäureamid, 2,4-Dihydroxychinolin, 5-Chlor-8-hydroxychinolin, 1-Hydroxynaphthalin-4-, -5- oder -8-sulfonsäureamid, 2-Hydroxynaphthalin-4-, -6- oder 7-sulfonsäureamid.

Eine weitere Ausführungsform des erfindungsgemässen Verfahrens ist dadurch gekennzeichnet, dass man vor der Chromierung bei pH 0 bis 2 ein Gemisch der weiter oben definierten metallisierbaren Ausgangsfarbstoffe in molarem Verhältnis von 0,85:1,0 bis 1,2:1,0 in einem Eintopfverfahren

mit einem chromabgebenden Mittel bei pH 3 bis 4 vorbehandelt, und anschliessend die Umsetzung wie oben beschrieben, d. h. unter Druck bei einer Temperatur oberhalb von 100 °C und einem pH zwischen 0 und 2 und dann bei schwach saurem, neutralem oder schwach alkalischem pH weiterführt.

Ein Vorteil der beschriebenen Vorbehandlung des erfindungsgemässen Verfahrens ist, dass insbesondere bei Ausgangsfarbstoffen, die sich nur sehr langsam bei einem pH von 0 bis 2 mit einem chromabgebenden Mittel umsetzen lassen, durch die Vorbehandlung bei pH 3 bis 4 eine Verkürzung der Reaktionszeit erzielt wird.

Die nach dem erfindungsgemässen Verfahren erhaltenen, asymmetrischen 1:2-Chromkomplexazofarbstoffe zeichnen sich durch eine hohe Produktreinheit aus, wie sie bisher nur von nach der Anlagerungsmethode hergestellten Komplexen bekannt ist.

Insbesondere bei einem molaren Verhältnis von 1:1 der Mischungspartner werden nach dem erfindungsgemässen Verfahren 1:2-Chromkomplexe mit über 95%iger Reinheit erhalten. Abweichungen von dem molaren Verhältnis von 1:1 der Mischungspartner dienen zur Einstellung der gewünschten Nuance.

Die nach dem erfindungsgemässen Verfahren erhaltenen, asymmetrischen 1:2-Chromkomplexazofarbstoffe eignen sich zum Färben und Bedrucken verschiedenster Stoffe, vor allem aber zum Färben tierischer Materialien, wie Seide, Leder und insbesondere Wolle, aber auch zum Färben und Bedrucken synthetischer Fasern aus Superpolyamiden, Superpolyurethanen oder Polyacrylnitril. Sie sind vor allem zum Färben aus schwach alkalischem, neutralem oder schwach saurem, vorzugsweise essigsaurem Bad geeignet. Die so erhaltenen Färbungen sind gleichmässig, sehr brillant und haben gute Allgemeinechtheiten, insbesondere gute Licht- und Nassechtheiten.

Das genannte Textilmaterial kann dabei in den verschiedensten Verarbeitungsformen vorliegen, wie z. B. als Faser, Garn, Gewebe oder Gewirke.

In der DD-B-151 003 wird ein Verfahren zur Herstellung von 1:2-Chromkomplexazofarbstoffen beschrieben, welches jedoch nicht gleich gute Resultate wie das erfindungsgemässe Verfahren aufweist. Aus der US-A-3939140 ist ein weiterers Verfahren zur Herstellung von 1:2-Chromkomplexazofarbstoffen in organischem Lösungsmittel bekannt.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1

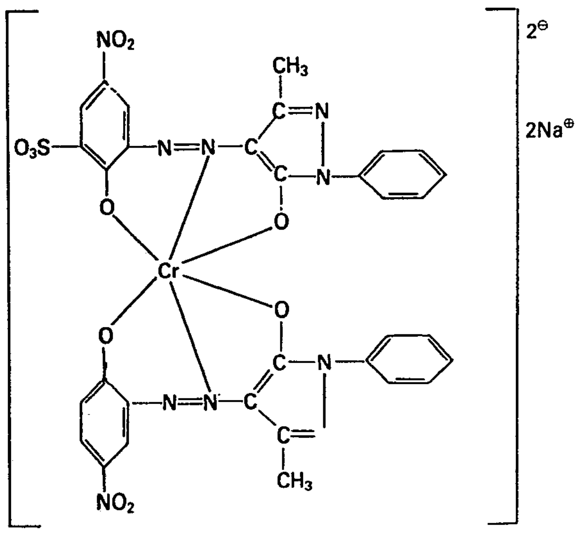

246 Teile 2-Amino-4-nitrophenol-6-sulfonsäure werden in 3000 Teilen Wasser gelöst und mit 200 Teilen 10 N Salzsäure versetzt. Diese Lösung wird mit ca. 1000 Teilen Eis auf 6 bis 8 °C gekühlt. Zu der Lösung lässt man dann 210 Teile einer 5 N Natriumnitritlösung einfliessen, wobei die Temperatur maximal 12 °C erreichen darf. Es wird eine Stunde nachgerührt und ein Überschuss an Nitrit mit Sulfaminsäure zerstört. Vor der Kupplung wird die Lösung mit 150 Teilen Eis auf 10 °C abgekühlt und mit 45 Teilen Natriumcarbonat in 300 Teilen Wasser auf pH 3 bis 3,2 gestellt (Lösung A).

162 Teile 2-Amino-4-nitrophenol werden in 1500 Teilen Wasser gelöst unter Zusatz von 250 Teilen 10 N Salzsäure und mit ca. 300 Teilen Eis auf 10 °C abgekühlt. Zu der Lösung lässt man 210 Teile 5 N Natriumnitritlösung einfliessen, wobei die Temperatur der Lösung 15 bis 20 °C beträgt. Ein geringer Nitritüberschuss wird mit Sulfaminsäure zerstört (Lösung B).

Zu einer Lösung aus 380 Teilen 1-Phenyl-3-methyl-5-pyrazolon in 4000 Teilen Wasser, die mit 10 N Salzsäure auf pH 4,5 bis 5 gestellt wurde, wird die Lösung A zugegeben, wobei die Temperatur maximal 5 °C erreichen darf. Die Lösung wird nach beendeter Kupplung mit Natriumcarbonat auf pH 4,5 gestellt. Anschliessend wird die Lösung B zugegeben. Nach beendeter Kupplung wird mit 300 Teilen 70%iger Schwefelsäure ein pH von ca. 0,5 eingestellt und der Lösung 20 Teile Salicylsäure und 176 Teile Chrom-(III)-sulfat zugegeben. Die Lösung wird auf 130 °C in einer geschlossenen Apparatur aufgeheizt, so dass sich ein Druck von 1,8 bis 2 kg/cm$^2$ einstellt und 6 h bei 130 °C belassen. Nach beendeter Metallisierung wird die Lösung auf 90 bis 95 °C abgekühlt und mit 800 Teilen einer 10 N Natriumhydroxid-Lösung auf pH 7,5 bis 8 gestellt. Man lässt eine Stunde nachrühren. Der Farbstoff wird mit Kochsalz ausgesalzen, abfiltriert, und bei 70 °C getrocknet. Der gebildete Farbstoff der oben angegebenen Konstitution färbt Wolle in orangen Tönen mit guten Echtheitseigenschaften. Der erhaltene Farbstoff besteht zu 96% aus dem reinen asymmetrischen 1:2-Chromkomplex. Die Ausbeute beträgt 93%.

Beispiel 2

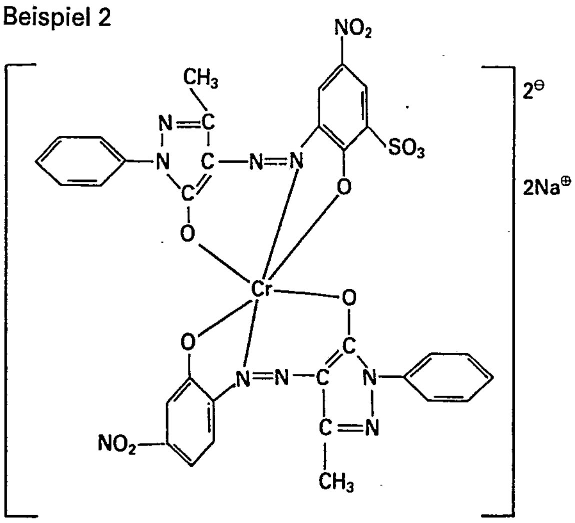

Wenn man wie in Beispiel 1 angegeben verfährt und als Lösung B eine Lösung mit 162 Teilen 2-Amino-5-nitrophenol anstelle von 2-Amino-4-nitrophenol verwendet, so erhält man den Farbstoff der oben angegebenen Konstitution, der Wolle in roten Tönen färbt. Der erhaltene Farbstoff besteht zu 93% aus dem reinen asymmetrischen 1:2-Chromkomplex. Die Ausbeute beträgt 90%.

Beispiel 3

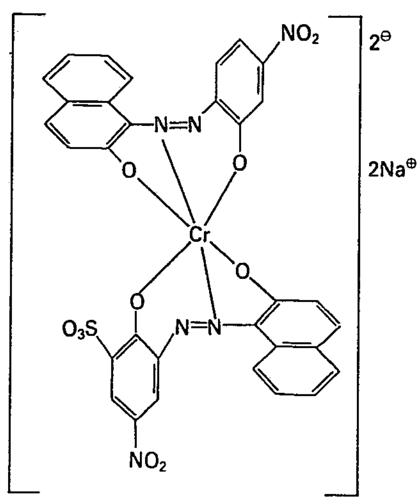

Wenn man wie in Beispiel 2 angegeben verfährt und als Kupplungskomponente 312 Teile 2-Hydroxynaphthalin anstelle von 380 Teilen 1-Phenyl-3-methyl-5-pyrazolon verwendet, so erhält man den Farbstoff der oben angegebenen Konstitution, der Wolle in grauen Tönen färbt. Der erhaltene Farbstoff besteht zu 93% aus dem reinen asymmetrischen 1:2-Chromkomplex. Die Ausbeute beträgt 92%.

Beispiel 4

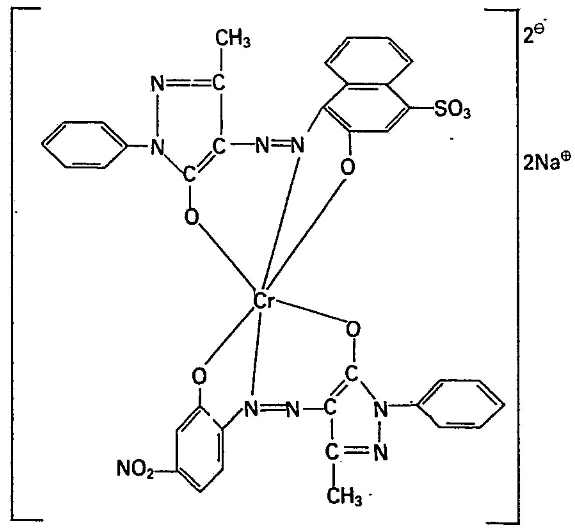

Wenn man wie in Beispiel 1 angegeben verfährt und als Lösung A eine Lösung mit 245 Teilen 1-Amino-2-hydroxynaphthalin-4-sulfonsäure anstelle von 2-Amino-4-nitrophenol-6-sulfonsäure und als Lösung B die in Beispiel 2 angegebene Lösung B verwendet, so erhält man den Farbstoff der oben angegebenen Konstitution, der Wolle in roten Tönen färbt. Der erhaltene Farbstoff besteht zu 95% aus dem reinen asymmetrischen 1:2-Chromkomplex. Die Ausbeute beträgt 90%.

Beispiel 5

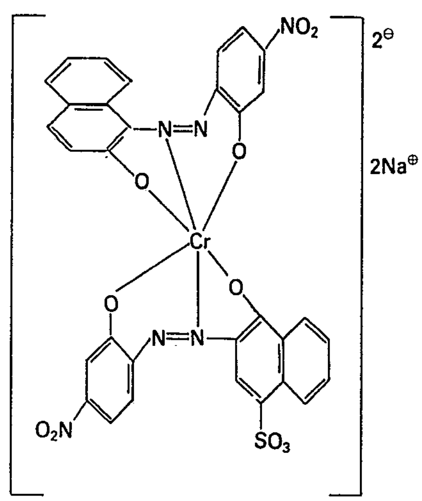

Eine Lösung aus 300 Teilen des Azofarbstoffes 5-Nitro-2-aminophenol→ 2-Naphthol und 400 Teilen des Azofarbstoffes 5-Nitro-2-aminophenol→ 1-Naphthol-4-sulfonsäure wird in 10 000 Teilen Wasser mit 70%iger Schwefelsäure auf pH 1 gestellt, 20 Teile Salicylsäure und 155 Teile Chrom(III)-sulfat zugesetzt. Die Mischung wird unter einem Druck von 1,8 bis 2 bar auf 130 °C erhitzt und 4 h bei dieser Temperatur belassen. Anschliessend

wird die Mischung auf 90 °C abgekühlt und mit Natriumhydroxid auf pH 8 gestellt und 1 bis 2 h bei 90 °C gerührt. Nach beendeter Reaktion wird der Farbstoff durch Natriumchloridzugabe abgeschieden, abfiltriert und getrocknet. Der erhaltene Farbstoff besteht zu 95% aus dem reinen asymmetrischen 1:2-Chromkomplex. Die Ausbeute beträgt 94%. Der so erhaltene Farbstoff der oben angegebenen Konstitution färbt Wolle in grauen Tönen.

Beispiel 6

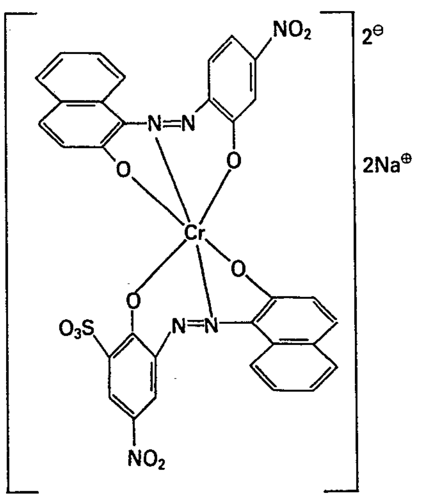

Eine Lösung aus 30 Teilen des Azofarbstoffes 5-Nitro-2-aminophenol→ 2-Naphthol und 40 Teilen des Azofarbstoffes 4-Nitro-2-amino-1-hydroxybenzol-6-sulfonsäure→ 2-Naphthol wird in 1000 Teilen Wasser mit 70%iger Schwefelsäure auf pH 3,5 gestellt und 2 Teile Salicylsäure und 16,0 Teile Chrom(III)-sulfat werden zugesetzt. Die Mischung wird bei pH 3,5 so lange gerührt, bis kein metallfreier Azofarbstoff nachweisbar ist. Anschliessend wird die Mischung der gebildeten 1:2-Chromkomplexe mit 70%iger Schwefelsäure auf pH 1 gestellt und unter einem Druck von 1,8 bis 2 bar auf 130 °C erhitzt, und 4 h bei dieser Temperatur belassen. Anschliessend wird die Mischung auf 90 °C abgekühlt und mit Natriumhydroxid auf pH 7 gestellt und 1 bis 2 h bei 90 °C gerührt. Nach beendeter Reaktion wird der Farbstoff durch Natriumchloridzugabe abgeschieden, abfiltriert und getrocknet. Der erhaltene Farbstoff besteht zu 95% aus dem reinen asymmetrischen 1:2-Chromkomplex. Die Ausbeute beträgt 92%. Der so erhaltene Farbstoff der oben angegebenen Konstitution färbt Wolle oder Polyamid in grauen Tönen.

Färbevorschrift für Wolle

In 4000 Teilen Wasser löst man 2 Teile Farbstoff gemäss Beispiel 1 und geht bei 40–50 °C mit 100 Teilen gut befeuchteter Wolle in das Färbebad. Man fügt hierauf 2 Teile 40%ige Essigsäure hinzu, erhitzt das Bad innert ½ h zum Sieden und hält ¾ h bei Siedetemperatur. Hierauf spült man die Wolle mit kaltem Wasser und trocknet sie. Die orange Färbung zeichnet sich durch gute Nassechtheiten und hohe Lichtechtheit aus.

Färbevorschrift für Polyamid

In ein Färbebad, das aus 3000 Teilen Wasser, 5 Teilen 40%iger Essigsäure, 10 Teilen Natriumsulfat und 2 Teilen des im Beispiel 1 erwähnten Chromkomplexes besteht, wird bei einer Temperatur um 50 bis 60 °C mit 100 Teilen Nylon 6,6-Gewebe eingegangen. Nachdem innerhalb einer halben Stunde das Bad zum Kochen erhitzt wurde, wird eine weitere Stunde bei Siedetemperatur gefärbt. Nach dem Spülen und Trocknen resultiert eine gleichmässige orange Färbung.

**Patentansprüche**

1. Verfahren zur Herstellung von zu mindestens 90% reinen, mindestens eine wasserlöslichmachende Gruppe enthaltenden asymmetrischen 1:2-Chromkomplexazofarbstoffen in wässrigem Medium, dadurch gekennzeichnet, dass man ein Gemisch zweier metallisierbarer Azofarbstoffe im molaren Verhältnis von 0,85:1,0 bis 1,2:1,0, die identische Diazokomponenten oder identische Kupplungskomponenten enthalten und wobei nur eine der beiden Azofarbstoffe mindestens eine wasserlöslichmachende Gruppe enthält, in einem Eintopfverfahren mit einem chromabgebenden Mittel unter Druck, bei einer Temperatur oberhalb von 100 °C und einem pH zwischen 0 und 2 umsetzt und anschliessend die Umsetzung in schwach saurem, neutralem oder schwach alkalischem pH weiterführt.

2. Verfahren gemäss Anspruch 1, dadurch gekennzeichnet, dass man als Temperatur oberhalb von 100 °C eine Temperatur von 100 bis 150 °C, insbesondere 125 bis 135 °C, wählt.

3. Verfahren gemäss Anspruch 1, dadurch gekennzeichnet, dass man als pH zwischen 0 und 2 einen pH von 0 bis 1, insbesondere 0,3 bis 0,7, wählt.

4. Verfahren gemäss Anspruch 1, dadurch gekennzeichnet, dass man die Umsetzung in schwach saurem, neutralem oder schwach alkalischem pH bei einer Temperatur unterhalb von 100°C, insbesondere bei 70 bis 100 °C, und vorzugsweise bei 90 bis 95 °C, durchführt.

5. Verfahren gemäss Anspruch 1, dadurch gekennzeichnet, dass man als schwach sauren, neutralen oder schwach alkalischen pH einen pH von 5 bis 9, insbesondere 6 bis 8, wählt.

6. Verfahren gemäss Anspruch 1, dadurch gekennzeichnet, dass man ein Gemisch zweier metallisierbarer Azofarbstoffe im molaren Verhältnis von 0,95:1,0 bis 1,05:1,0, insbesondere im Verhältnis von 1:1, verwendet.

7. Verfahren gemäss Anspruch 1, dadurch gekennzeichnet, dass man unter einem Druck von 1 bis 5 bar, vorzugsweise 1 bis 3 bar, chromiert.

8. Verfahren gemäss Anspruch 1 dadurch gekennzeichnet, dass man einen Überschuss von 1 bis 5 Mol-% an chromabgebendem Mittel verwendet.

9. Verfahren gemäss Anspruch 1, dadurch gekennzeichnet, dass man die Chromierung in Gegenwart katalytischer Mengen von Hilfskomplexverbindungen, insbesondere Weinsäure, Milchsäure, Zitronensäure oder Glykolsäure, oder vorzugsweise Salicylsäure, durchführt.

10. Verfahren gemäss den Ansprüchen 1 bis 9, dadurch gekennzeichnet, dass man in einem Eintopfverfahren zwei mindestens durch eine wasserlöslichmachende Gruppe voneinander verschiedene diazotierbare Amine, die in Nachbarstellung zur Aminogruppe eine metallisierbare Gruppe enthalten, diazotiert und auf die 1,8- bis 2,2-fache molare Menge einer von wasserlöslichmachenden Gruppen freie Kupplungskomponente, die in Nachbarstellung zur Kupplungsstelle eine metallisierbare Gruppe enthält, kuppelt und anschliessend gemäss der in den Ansprüchen 1 bis 9 angegebenen Verfahrensweise chromiert.

11. Verfahren gemäss den Ansprüchen 1 bis 9, dadurch gekennzeichnet, dass man in einem Eintopfverfahren ein von wasserlöslichmachenden Gruppen freies diazotierbares Amin, das in Nachbarstellung zur Aminogruppe eine metallisierbare Gruppe enthält, diazotiert und auf die je halbmolaren Mengen zweier mindestens durch eine wasserlöslichmachende Gruppe voneinander verschiedenen Kupplungskomponenten, die je in Nachbarstellung zur Kupplungsstelle eine metallisierbare Gruppe enthalten, kuppelt und anschliessend gemäss der in den Ansprüchen 1 bis 9 angegebenen Verfahrensweise chromiert.

12. Verfahren gemäss den Ansprüchen 1 bis 9, dadurch gekennzeichnet, dass man zwei mindestens durch eine wasserlöslichmachende Gruppe voneinander verschiedene diazotierbare Amine, die in Nachbarstellung zur Aminogruppe eine metallisierbare Gruppe enthalten, getrennt diazotiert und beide Diazoniumsalze auf die 1,8- bis 2,2-fache molare Menge einer von wasserlöslichmachenden Gruppen freie Kupplungskomponente, die in Nachbarstellung zur Kupplungsstelle eine metallisierbare Gruppe enthält, kuppelt und anschliessend gemäss der in den Ansprüchen 1 bis 9 angegebenen Verfahrensweise chromiert.

13. Verfahren gemäss den Ansprüchen 1 bis 9, dadurch gekennzeichnet, dass man von getrennt hergestellten Azofarbstoffen, die den in Anspruch 1 angegebenen Anforderungen entsprechen, ausgeht.

14. Verfahren gemäss einem der Ansprüche 1 und 10 bis 13, dadurch gekennzeichnet, dass man als Azofarbstoffe Monoazofarbstoffe verwendet, die Diazokomponenten und Kupplungskomponenten der Benzol-, Naphthalin- oder heterocyclischen Reihe enthalten.

15. Verfahren gemäss einem der Ansprüche 1 und 10 bis 14, dadurch gekennzeichnet, dass man Azofarbstoffe verwendet, die als metallisierbare Gruppen Hydroxylgruppen enthalten.

16. Verfahren gemäss den Ansprüchen 1 und 10 bis 15, dadurch gekennzeichnet, dass man Azofarbstoffe verwendet, die als wasserlöslichmachende Gruppe eine Sulfon-, Sulfonamid-, N-Mono- oder N,N-Dialkylsulfonamid- oder Sulfonsäure-Gruppe enthalten.

17. Verfahren gemäss Anspruch 16, dadurch gekennzeichnet, dass man Azofarbstoffe verwendet, die eine Sulfonsäuregruppe enthalten.

18. Verfahren gemäss Anspruch 14, dadurch gekennzeichnet, dass man ein Gemisch der Azofarbstoffe der Formeln

$$\underset{OH}{D} - N = N - \underset{OH}{K} \qquad (1)$$

und

$$\left[\underset{OH}{D'} - N = N - \underset{OH}{K'}\right] - (SO_3M)_p \qquad (2)$$

verwendet, worin D und D' unabhängig voneinander einen Benzol- oder Naphthalinrest bedeuten, der durch $C_{1-4}$-Alkyl, $C_{1-4}$-Alkoxy, Halogen oder Nitro substituiert sein kann, und K und K' unabhängig voneinander einen Naphthalin- oder Pyrazolonrest bedeuten, der durch $C_{1-4}$-Alkyl, $C_{1-4}$-Alkoxy, Halogen oder Nitro substituiert sein kann, und worin die Hydroxygruppen in Nachbarstellung zur Azogruppe stehen, M ein Kation ist und D und D' oder K und K' identische Reste sind und p = 1 oder 2 ist.

19. Verfahren gemäss Anspruch 18, dadurch gekennzeichnet, dass man einen Farbstoff der Formel (1), worin D ein durch Nitro oder Chlor substituierter Benzolrest und K ein 1-Phenyl-3-methylpyrazolon-(5)- oder Naphthalinrest ist und einen Farbstoff der Formel (2), worin D' ein durch Nitro, Chlor oder gegebenenfalls Sulfo substituierter Benzolrest oder ein durch Nitro oder gegebenenfalls Sulfo substituierter Naphthalinrest und K' ein 1-Phenyl-3-methylpyrazolon-(5)- oder ein gegebenenfalls durch Sulfo substituierter Naphthalinrest ist, verwendet, wobei der Farbstoff der Formel (2) eine einzige Sulfonsäuregruppe enthält.

20. Verfahren gemäss Anspruch 1, dadurch gekennzeichnet, dass man vor der Chromierung bei pH 0 bis 2 die definierten metallisierbaren Ausgangsstoffe mit einem chromabgebenden Mittel bei pH 3 bis 4 vorbehandelt.

## Claims

1. A process for the preparation of an asymmetrical 1:2 chromium complex azo dye in aqueous medium of not less than 90% purity and containing at least one water-solubilising group, which process comprises reacting a mixture of two metallisable azo dyes that contain identical diazo components or identical coupling components, in the molar ratio of 0.85:1.0 to 1.2:1.0, where only one of the two azo dyes contains at least one water-solubilising group, with a chromium donor, under pressure in a single vessel process and at a temperature above 100 °C and at a pH from 0 to 2, and subsequently carrying out further reaction at a weakly acid, neutral or weakly alkaline pH.

2. A process according to claim 1, which comprises choosing as temperature above 100 °C a temperature from 100 to 150 °C, in particular from 125 to 135 °C.

3. A process according to claim 1, which comprises choosing as pH from 0 to 2 a pH from 0 to 1, in particular 0.3 to 0.7.

4. A process according to claim 1, which comprises carrying out the reaction at a weakly acid, neutral or weakly alkaline pH at a temperature below 100 °C, in particular at 70 to 100 °C and preferably 90 to 95 °C.

5. A process according to claim 1, which comprises choosing as weakly acid, neutral or weakly alkaline pH a pH from 5 to 9, in particular from 6 to 8.

6. A process according to claim 1, which comprises using a mixture of two metallisable azo dyes, in the molar ratio of 0.95:1.0 to 1.05:1.0, in particular in the ratio of 1:1.

7. A process according to claim 1, which comprises chroming under a pressure of 1 to 5 bar, preferably of 1 to 3 bar.

8. A process according to claim 1, which comprises using an excess of 1 to 5 mol-% of chromium donor.

9. A process according to claim 1, wherein the chroming is carried out in the presence of a catalytic amount of a complexing assistant, in particular tartaric acid, lactic acid, citric acid or glycolic acid or, preferably, salicylic acid.

10. A process according to any one of claims 1 to 9, which comprises, in a single vessel process, diazotising two diazotisable amines that differ from each other at least by one water-solubilising group and which contain a metallisable group vicinal to the amino group, and coupling the product to the 1.8–2.2-fold molar amount of a coupling component that contains no water-solubilising groups and contains a metallisable group vicinal to the coupling site, and subsequently chroming in accordance with the procedure specified in any one of claims 1 to 9.

11. A process according to any one of claims 1 to 9, which comprises, in a single vessel process, diazotising a diazotisable amine that contains no water-solubilising groups and which contains a metallisable group vicinal to the amino group, and coupling the product to half the molar amount of each of two coupling components that differ from each other at least by one water-solubilising group and which each contain a metallisable group vicinal to the coupling site, and subsequently chroming in accordance with the procedure specified in any one of claims 1 to 9.

12. A process according to any one of claims 1 to 9, which comprises diazotising separately two diazotisable amines that differ from each other at least by one water-solubilising group and which contain a metallisable group vicinal to the amino group, and coupling both diazonium salts to the 1.8- to 2.2-fold molar amount of a coupling component that contains no water-solubilising groups and which contains a metallisable group vicinal to the coupling site, and subsequently chroming in accordance with the procedure specified in any of claims 1 to 9.

13. A process according to any one of claims 1 to 9, which comprises starting from separately prepared azo dyes that correspond to the requirements specified in claim 1.

14. A process according to any one of claims 1 and 10 to 13, which comprises using, as azo dyes, monoazo dyes that contain diazo components and coupling components of the benzene, naphthalene or heterocyclic series.

15. A process according to any one of claims 1 and 10 to 14, which comprises the use of azo dyes that contain hydroxyl groups as metallisable groups.

16. A process according to any one of claims 1 and 10 to 15, which comprises the use of azo dyes that contain a sulfone, sulfonamide, N-monoalkylsulfonamide or N,N-dialkylsulfonamide or sulfonic acid group as water-solubilising group.

17. A process according to claim 16, which comprises the use of azo dyes that contain a sulfonic acid group.

18. A process according to claim 14, which comprises the use of a mixture of azo dyes of the formulae

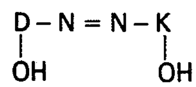 (1)

and

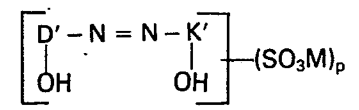 (2)

wherein D and D′ independently of one another are a radical of the benzene or naphthalene series which can be substituted by $C_{1-4}$-alkyl, $C_{1-4}$-alkoxy, halogen or nitro, and K and K′ independently of one another are a naphthalene or pyrazolone radical which can be substituted by $C_{1-4}$-alkyl, $C_{1-4}$-alkoxy, halogen or nitro, and wherein the hydroxyl groups are vicinal to the azo group, M is a cation, and D and D′ or K and K′ are identical radicals, and p is 1 or 2.

19. A process according to claim 18, which comprises the use of a dye of formula (1), wherein D is a benzene radical which is substituted by nitro or chlorine, and K is a 1-phenyl-3-methylpyrazol-5-one radical or a naphthalene radical, and a dye of formula 2, (2), wherein D′ is a benzene radical which is substituted by nitro, chlorine or optionally sulfo, or is a naphthalene radical which is substituted by nitro or optionally sulfo, and K′ is a 1-phenyl-3-methylpyrazol-5-one radical, or a naphthalene radical which may be substituted by sulfo, where the dye of formula (2) contains a single sulfonic acid group.

20. A process according to claim 1, which comprises pretreating the defined metallisable starting materials, prior to the chroming at pH 0 to 2, with a chromium donor at pH 3 to 4.

**Revendications**

1. Procédé pour la préparation en milieu aqueux de complexes de chrome 1:2 asymétriques de

colorants azoïques contenant au moins un groupe hydroxolubilisant, avec une pureté d'au moins 90%, caractérisé en ce que l'on fait réagir un mélange en un rapport molaire de 0,85:1,0 à 1,2:1,0 de deux colorants azoïques métallables contenant des composants diazo identiques ou des copulants identiques, un seul des deux colorants azoïques contenant au moins un groupe hydrosolubilisant, dans une opération en un seul récipient, avec un agent apportant du chrome, sous pression, à une température supérieure à 100 °C et à un pH entre 0 et 2, puis on poursuit la réaction à pH légèrement acide, neutre, ou légèrement alcalin.

2. Procédé selon la revendication 1, caractérisé en ce que la température choisie au-dessus de 100 °C est une température de 100 à 150 °C, plus spécialement de 125 à 135 °C.

3. Procédé selon la revendication 1, caractérisé en ce que l'on choisit en tant que pH entre 0 et 2 un pH de 0 à 1, plus particulièrement de 0,3 à 0,7.

4. Procédé selon la revendication 1, caractérisé en ce que la réaction à pH légèrement acide, neutre ou légèrement alcalin est effectuée à une température inférieure à 100 °C, plus spécialement de 70 à 100 °C et de préférence de 90 à 95 °C.

5. Procédé selon la revendication 1, caractérisé en ce que l'on choisit en tant que pH légèrement acide, neutre ou légèrement alcalin, un pH de 5 à 9, plus spécialement de 6 à 8.

6. Procédé selon la revendication 1, caractérisé en ce que l'on utilise un mélange de deux colorants azoïques métallables en un rapport molaire de 0,95:1,0 à 1,05:1,0 et plus spécialement en un rapport de 1:1.

7. Procédé selon la revendication 1, caractérisé en ce que l'on effectue la chromation sous une pression de 1 à 5 bar, de préférence de 1 à 3 bar.

8. Procédé selon la revendication 1, caractérisé en ce que l'on utilise l'agent apportant du chrome en excès de 1 à 5 moles-%.

9. Procédé selon la revendication 1, caractérisé en ce que l'on effectue la chromation en présence de quantités catalytiques de composés complexants auxiliaires, en particulier l'acide tartrique, l'acide lactique, l'acide citrique ou l'acide glycolique ou de préférence l'acide salicylique.

10. Procédé selon les revendications 1 à 9, caractérisé en ce que, dans une opération en un seul récipient, on diazote deux amines diazotables différant l'une de l'autre au moins par la présence d'un groupe hydrosolubilisant, qui comportent un groupe métallable en position voisine du groupe amino, on effectue la copulation sur 1,8 à 2,2 fois la quantité molaire d'un copulant exempt de groupe hydrosolubilisant, qui comporte un groupe métallable en position voisine du site de copulation, puis on effectue la chromation par le mode opératoire indiqué dans les revendications 1 à 9.

11. Procédé selon les revendications 1 à 9, caractérisé en ce que, dans une opération en un seul récipient, on diazote un amine diazotable exempte de groupe hydrosolubilisant, qui comporte un groupe métallable en position voisine du groupe amino, et on effectue la copulation sur des quantités semi-molaires de chacun de deux copulants différant l'un de l'autre au moins par la présence d'un groupe hydrosolubilisant qui comportent chacun un groupe métallable en position voisine du site de copulation, puis on effectue la chromation par le mode opératoire indiqué dans les revendications 1 à 9.

12. Procédé selon les revendications 1 à 9, caractérisé en ce que l'on diazote séparément deux amines diazotables différant l'une de l'autre au moins par la présence d'une groupe hydrosolubilisant, qui comportent un groupe métallable en position voisine du groupe amino, et on copule les deux sels de diazonium sur une quantité 1,8 à 2,2 fois molaire d'un copulant exempt de groupe hydrosolubilisant, qui comporte un groupe métallable en position voisine du site de copulation, puis on effectue la chromation par le mode opératoire indiqué dans les revendications 1 à 9.

13. Procédé selon les revendications 1 à 9, caractérisé en ce que l'on part de deux colorants azoïques préparés séparément et qui répondent aux exigences spécifiées dans la revendication 1.

14. Procédé selon l'une des revendications 1 et 10 à 13, caractérisé en ce que l'on utilise, en tant que colorants azoïques, des colorants monoazoïques comportant des composants diazo et des copulants de série benzénique, naphthalénique ou hétérocyclique.

15. Procédé selon l'une des revendications 1 et 10 à 14, caractérisé en ce que l'on utilise des colorants azoïques qui comportent des groupes hydroxy en tant que groupes métallables.

16. Procédé selon les revendications 1 et 10 à 15, caractérisé en ce que l'on utilise des colorants azoïques qui comportent, en tant que groupe hydrosolubilisant, un groupe sulfone, sulfonamide, N-mono- ou N,N-di-alkyl-sulfonamide ou acide sulfonique.

17. Procédé selon la revendication 16, caractérisé en ce que l'on utilise des colorants azoïques qui comportent un groupe acide sulfonique.

18. Procédé selon la revendication 14, caractérisé en ce que l'on utilise un mélange de colorants azoïques de formules

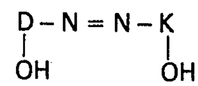
(1)

et

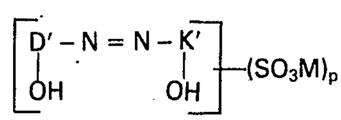
(2)

dans lesquelles D et D' représentent chacun, indépendamment l'un de l'autre, un radical benzénique ou naphthalénique qui peut être substitué par des groupes alkyle en $C_{1-4}$, alkoxy en $C_{1-4}$, des atomes d'halogène ou des groupes nitro, et K et K' représentent chacun, indépendamment l'un de l'autre, un radical naphthalénique ou un radical pyrazolone qui peut être substitué par des groupes alkyle en $C_{1-4}$, alkoxy en $C_{1-4}$, des halo-

gènes ou des groupes nitro, et dans lesquelles les groupes hydroxy sont en position voisine du groupe azo, M représente un cation, et D et D', ou K et K', sont des radicaux identiques et p vaut 1 ou 2.

19. Procédé selon la revendication 18, caractérisé en ce que l'on utilise un colorant de formule (1), dans laquelle D représente un radical benzénique substitué par un groupe nitro ou par un atome de chlore et K représente un radical 1-phényl-3-méthylpyrazolone-(5)- ou un radical naphthalénique, et un colorant de formule (2) dans laquelle D' représente un radical benzénique substitué par un groupe nitro ou un atome de chlore ou, le cas échéant, un groupe sulfo, ou un radical naphthalénique substitué par un groupe nitro ou, le cas échéant, un groupe sulfo, et K' représente un radical 1-phényl-3-méthylpyrazolone-(5)- ou un radical naphthalénique éventuellement substitué par un groupe sulfo, le colorant de formule (2) ne contenant qu'un seul groupe acide sulfonique.

20. Procédé selon la revendication 1, caractérisé en ce que, avant la chromation à pH 0–2, on soumet les composants de départ métallables définis à un traitement préalable par un agent apportant du chrome, à pH 3–4.